# EUROPEAN PATENT APPLICATION

(11) **EP 4 775 423 A1**
(43) Date of publication of application: **15.07.2026**
(21) Application number: 23951379.9
(22) Date of filing: 27.12.2023
(51) Int. Cl.: B60K 7/00, B60G 7/00, B60G 13/00, B62D 5/04

(54) **WHEEL SIDE MODULE SYSTEM**

(30) Priority: 07.09.2023 CN 202311150538
(71) Applicant: Jingzhou Wisedawn Electric Car Co., Ltd., Jingzhou, Hubei 434001 (CN)
(72) Inventor: GUAN, Xin, Jingzhou, Hubei 434001 (CN); ZHAO, Xiaoliang, Jingzhou, Hubei 434001 (CN); WANG, Baohe, Jingzhou, Hubei 434001 (CN)
(74) Representative: Cabinet Chaillot
(86) International application number: PCT/CN2023/142184
(87) International publication number: WO 2025/050568

(57) **Abstract**

A wheel side module system, relating to the technical field of automobile chasses. The system comprises a disconnected installation suspension for a lower rear control arm and a lower front control arm, so that the lengths of the upper and lower control arms are reduced while ensuring that the characteristics of a main pin are optimal, thereby optimizing the layout space. The lower end of a shock absorber is arranged at the lower rear control arm, so that the vertical stress of the shock absorber is more appropriate. According to the wheel side bracket, integration of systems on the chassis is implemented, so that the systems of the chassis are integrated and productized, and the layout design of the whole vehicle development is more simplified, has a high degree of freedom, has a high applicability of a wheel side module for the development of new models, and has an open model development spectrum. A distributed steering system adopts an independent steering gear that controls an individual wheel, realizes the control of an individual wheel by a whole-vehicle controller, and accurately guarantees an Ackerman angle relationship between inner and outer steering wheels, so that not only the controllability of the vehicle is improved, but also the control accuracy of the steering system is improved, thereby improving the operation accuracy of the vehicle.

## Description

### TECHNICAL FIELD

The present invention belongs to the technical field of automobile chassis, and in particular relates to a wheel side module system.

### BACKGROUND ART

With the continuous development of the automobile industry, the application of intelligent driving and drive-by-wire chassis on the vehicle side is gradually increasing, imposing more stringent requirements on the control accuracy and operation efficiency of vehicle execution units. Traditional vehicles adopt a scheme in which a central motor drives the wheels through a drive shaft and a single steering gear controls the wheels on both sides of a single axle, and the problem of transmission efficiency loss caused by this scheme has not been effectively solved. In addition, freight vehicles require more flexible steering, while vehicles with a single steering gear for a single axle cannot effectively improve vehicle maneuverability due to the linked steering of the two wheels.

In addition, during the long development process of new models of traditional automobiles, the components of each chassis system are distributed at various positions of the whole vehicle, resulting in complex and difficult layout work of the whole vehicle with limited layout freedom. Moreover, the chassis layout scheme cannot be completely universal in the development of new models, leading to poor relevance of the model spectrum. Since the parts of each chassis system are distributed at various positions of the whole vehicle, after-sales maintenance is also fraught with difficulties.

To realize the control of a single wheel, traditional models adopt a scheme in which a lead screw motor or a motor installed at the upper point of the kingpin drives the wheel to steer. For the scheme using a lead screw motor, to ensure a smaller motion envelope of the lead screw motor and avoid motion interference, the lead screw stroke is designed to be very small, which in turn increases the range of toe change of the wheel during the wheel jounce and rebound process, leading to abnormal wear of the wheel and being unfavorable to the driving stability of the vehicle when the vehicle turns at high speed.

Since the motor is mounted on the upper swing arm in the scheme of installing a motor at the upper point of the kingpin, the wheel side motion envelope becomes excessively large when the wheel jounces up and down, resulting in a higher frame/body longitudinal beam, which affects the layout space above the suspension. At the same time, a larger space is required for the design of the wheel housing, which impairs the overall aesthetics of the vehicle.

### SUMMARY OF THE INVENTION

Aiming at the deficiencies in the prior art, the objective of the present invention is to provide a wheel side module system.

The technical solution adopted by the present invention is as follows: a wheel side module system includes a hub motor and a steering knuckle connected to the hub motor, and is characterized by further including:
a mounting suspension having a lower rear control arm connected to a frame and disposed at a lower end of a shock absorber, an upper control arm located at an upper end of the shock absorber and the lower rear control arm forming a double wishbone structure with a height difference; the disconnected lower rear control arm and lower front control arm being connected to one side of the steering knuckle, a virtual kingpin lower hard point of the lower rear control arm and the lower front control arm being advanced to the other side of the steering knuckle, and the hub motor being connected at the position of the virtual kingpin lower hard point;
a distributed steering gear having an outer ball pin end of a tie rod for connection with the steering knuckle controlled by the hub motor; the tie rod being connected to an inner ball pin seat of the tie rod that is connected to one end of a rack; the steering gear for driving a single wheel on one side being driven by a steering drive motor connected thereto, the steering drive motor being connected to a motor controller to receive control signals, and a housing of the steering gear being provided with a mounting end for connection with a wheel side bracket;
and the wheel side bracket being respectively connected to the distributed steering gear, the shock absorber, and the lower rear control arm and the lower front control arm of the mounting suspension.

In the above scheme, the wheel side bracket includes an upper connection part, a middle connection part and a lower connection part; the bottom of the upper connection part extends horizontally and then bends vertically downward to form a stepped structure for avoiding a wheel housing; the lower bent part extends downward continuously through an inclined support structure to form the middle connection part, wherein the left side of the inclined support structure first concaves inward and then stretches outward; and the bottom of the middle connection part is connected to the lower connection part formed by horizontal extension.

In the above scheme, the upper connection part is integrated with an upper shock absorber mounting flange and upper control arm bosses; a circular hole for avoiding a locking structure at an upper end of a piston rod of the shock absorber is designed at the center of the upper shock absorber mounting flange for connection with a circular upper support of the shock absorber, and mounting through holes matched with mounting bolts for fixing the upper support of the shock absorber are further arranged around the circular hole.

Threaded holes for mounting the upper control arm are arranged on the upper control arm bosses; the upper control arm bosses are provided with thickened ends for improving the mounting strength at the mounting position of the upper control arm; and reinforcing ribs for increasing the vertical rigidity of the upper control arm bosses and the shock absorber mounting flange, which start from the thickened ends and extend to the surface of the lower connection part, are respectively arranged on the two upper control arm bosses.

In the above scheme, the thickened ends of the two upper control arm bosses are connected by a reinforcing rib for improving longitudinal rigidity.

In the above scheme, weight reduction grooves are symmetrically arranged on the upper connection part; cross-shaped reinforcing ribs are arranged inside the weight reduction grooves; and a central hole is further arranged between the two weight reduction grooves.

In the above scheme, two frame upper mounting bosses, a lower front control arm bracket and a lower rear control arm bracket for connection with lower control arms are symmetrically arranged on the middle connection part; a left weight reduction groove and a right weight reduction groove are arranged on the inclined support structure of the middle connection part; and an avoidance groove for avoiding the tie rod is arranged between the left weight reduction groove and the right weight reduction groove.

The middle connection part further includes a groove for avoiding the lower front control arm; longitudinal reinforcing ribs for transmitting stress at the frame mounting position are arranged at the joint of the two frame upper mounting bosses; and longitudinal reinforcing ribs for transmitting stress at the mounting positions of the two lower control arms are connected between the lower front control arm bracket and the lower rear control arm bracket.

In the above scheme, cross-shaped reinforcing ribs are arranged in the left weight reduction groove and the right weight reduction groove.

In the above scheme, a steering gear mounting boss and a frame lower mounting boss with a height difference are arranged on the lower connection part; the lower connection part further includes the frame lower mounting boss with through holes for connection with a frame lower longitudinal beam and a cylindrical groove for avoiding the steering gear.

The beneficial effects of the present invention are as follows: the wheel side module system includes the mounting suspension with the disconnected lower rear control arm and lower front control arm, which shortens the lengths of the upper and lower control arms and optimizes the layout space on the premise of ensuring the optimal kingpin characteristics; the lower end of the shock absorber is arranged at the lower rear control arm, so that the vertical stress of the shock absorber 8 is more reasonable; the wheel side bracket realizes the integration of various chassis systems, enabling the integration and productization of the chassis systems, making the layout design of whole vehicle development more simplified with higher freedom, higher applicability of the wheel side module for the development of new models, and a more open model development spectrum; the distributed steering system adopts independent steering gears for controlling a single wheel, realizing the control of a single wheel by a whole vehicle controller, accurately ensuring the Ackermann angle relationship between the inner and outer steering wheels, which not only improves the vehicle controllability but also enhances the control accuracy of the steering system, thereby improving the operation accuracy of the vehicle.

### BRIEF DESCRIPTION OF DRAWINGS

To explain the embodiments of the present invention or the technical solutions in the prior art more clearly, the drawings required in the embodiments will be briefly introduced below. Obviously, the drawings in the following description are only some embodiments of the present invention, and those skilled in the art can obtain other drawings according to these drawings without creative work.
FIG. 1 is a schematic structural diagram of a wheel side module system according to an embodiment of the present invention;
FIG. 2 is a schematic structural diagram of a wheel side bracket according to an embodiment of the present invention;
FIG. 3 is a schematic back structural diagram of a wheel side bracket according to an embodiment of the present invention;
FIG. 4 is a schematic diagram of the position of a kingpin lower hard point according to an embodiment of the present invention;
FIG. 5 is a schematic structural diagram of a distributed steering gear according to an embodiment of the present invention.

Description of reference numerals:1 - hub motor, 2 - steering knuckle, 3 - upper control arm, 3 - shock absorber upper support, 4, 4-1 - through hole, 4-2 - threaded hole, 4-4 - threaded hole, 4 - wheel side bracket, 41 - upper connection part, 411 - support surface, 412 - circular hole, 413 - flange, 414 - central hole, 415 - boss, 416 - thickened end, 417 - weight reduction groove, 418 - reinforcing rib, 419 - connecting reinforcing rib, 4110 - longitudinal reinforcing rib, 42 - middle connection part, 421 - upper mounting boss, 422 - weight reduction groove, 423 - weight reduction groove, 424 - inclined support structure, 425 - left weight reduction groove, 426 - right weight reduction groove, 427 - avoidance groove, 428 - groove, 429 - longitudinal reinforcing rib, 4210 - lower front control arm bracket, 4211 - lower rear control arm bracket, 4212 - longitudinal reinforcing rib, 43 - lower connection part, 431 - steering gear mounting boss, 432 - frame lower mounting boss, 433 - cylindrical groove, 5 - distributed steering gear, 51 - rack limit block, 52 - dust cover, 53 - limit surface, 54 - housing, 55 - limit groove, 56 - pin seat, 6 - lower rear control arm, 7 - lower front control arm, 8 - shock absorber, 9 - rack, 10 - single-side tie rod.

### DETAILED DESCRIPTION

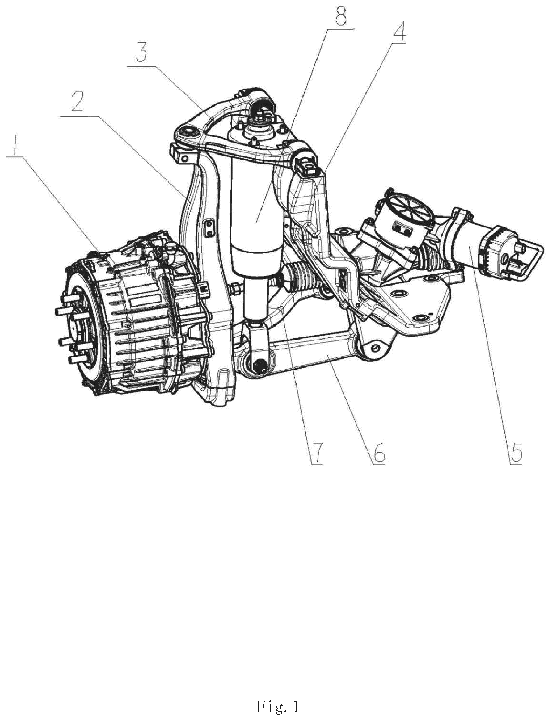

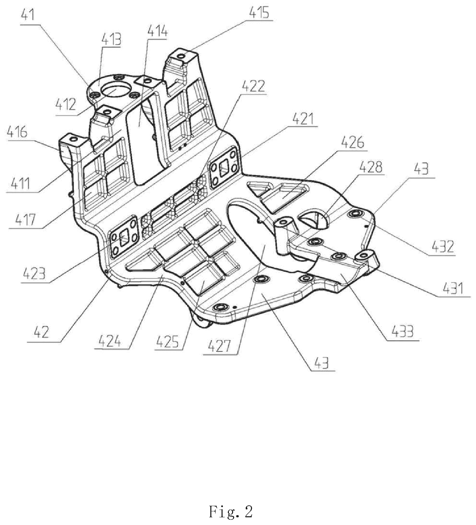

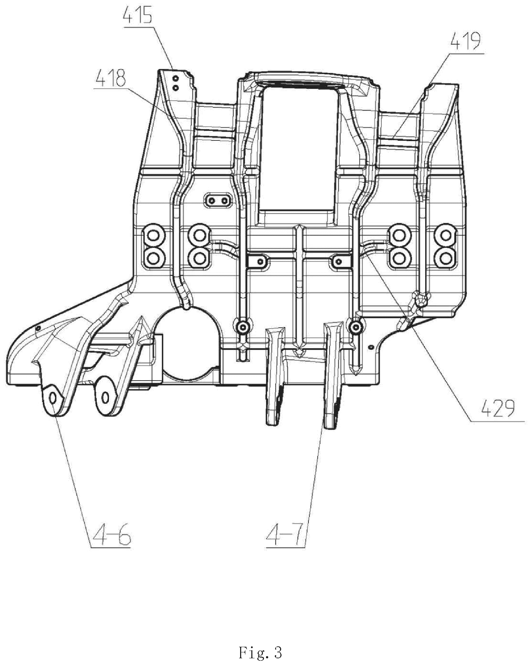

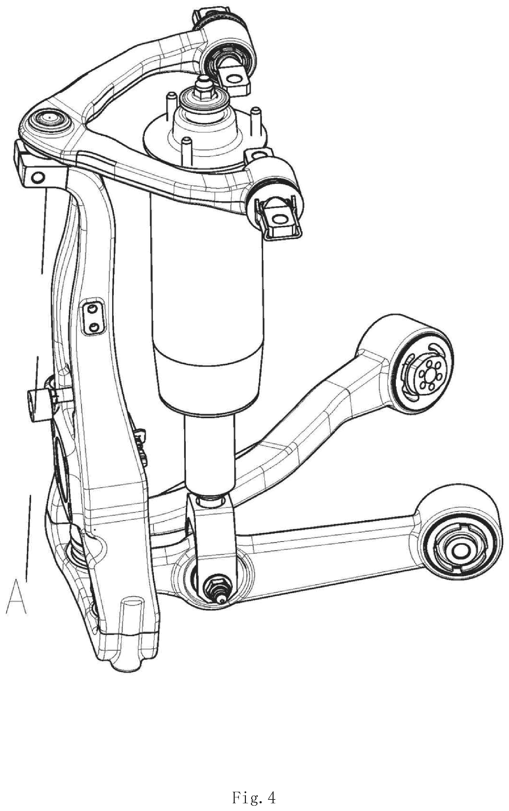

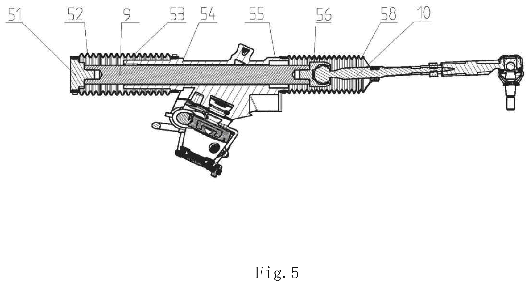

To make the above objectives, features and advantages of the present invention more obvious and understandable, the present invention will be described in further detail below with reference to FIGS. 1 to 5 and the specific embodiments.

The wheel side module system adopted in this embodiment includes a hub motor 1, a steering knuckle 2 connected to the hub motor 1, a mounting suspension, a distributed steering gear 5 and a wheel side bracket 4, and the specific structure is as follows:
The mounting suspension adopts a double wishbone type, including an upper control arm 3 and disconnected lower control arms. The lower rear control arm 6 and the lower front control arm 7 are connected to one side of the steering knuckle 2, and the virtual kingpin lower hard point of the lower rear control arm 6 and the lower front control arm 7 is advanced to the other side of the steering knuckle 2. On the premise of ensuring the optimal kingpin characteristics, this structure shortens the lengths of the upper and lower control arms and optimizes the layout space by increasing the height difference between the upper control arm 3 and the lower control arms and designing the disconnected lower control arms to obtain a forward-located virtual kingpin lower hard point. In this embodiment, the hub motor 1 is also connected at position A where the virtual kingpin lower hard point is located. The lower end of the shock absorber 8 is arranged at the lower rear control arm 6, and the lower rear control arm 6 serves as a bearing arm, so that the vertical stress of the shock absorber 8 is more reasonable. At the same time, the double wishbone suspension has excellent controllability and more reasonable decoupling of wheel motion, and combined with the split steering gear, it can be used under harsh working conditions such as high speed, heavy load and other severe working conditions, and is applicable to various vehicle models.

The distributed steering gear 5 in this embodiment includes a plurality of independent steering gears for controlling a single wheel. A rack 9 moving axially along the independent steering gear is arranged in a housing 54 of the independent steering gear, and the housing 54 of the independent steering gear is fixedly connected with a dust cover 52 through a hoop. A pin seat 56 for connection with an inner ball pin end of a single-side tie rod 10 is arranged on one side inside the dust cover 52, and an outer ball pin end of the single-side tie rod 10 is connected with the steering knuckle 2 which is controlled by the hub motor 1 and connected with the wheel at the same time. The movement of the rack 9 drives the pin seat 56 to move, and the pin seat 56 stops moving when moving into a limit groove 55 at one end of the housing 54 of the independent steering gear, realizing the stroke limit of the single-side tie rod 10. A rack limit block 51, which replaces the existing second tie rod, is arranged on the other (interior) side of the dust cover 52;the rack limit block 51 is screwed to the rack 9 and moves with the rack 9, and the limit of the other end of the rack 9 is realized when the rack limit block 51 contacts the limit surface 53 of the housing 54 of the independent steering gear. Since there is no tie rod on the side of the rack limit block 51, the conical necking design of the tie rod dust cover on the side with the tie rod is not required, and only the axial movement of the dust cover needs to be considered. Therefore, the diameter of the rack limit block 51 in this embodiment is consistent with the diameters of the housing 54 and the dust cover 52 of the independent steering gear, so an equal-width dust cover can be adopted without the conical necking design, which has a simple structure and lower cost, and is not easy to cause rubber damage and oil leakage due to long-term torsion.

Each wheel in this embodiment is controlled by an independent steering gear to form a distributed structure, realizing the control of a single wheel by the whole vehicle controller, accurately ensuring the Ackermann angle relationship between the inner and outer steering wheels, which not only improves the vehicle controllability but also enhances the control accuracy of the steering system, thereby improving the operation accuracy of the vehicle. In addition, different driving modes of the vehicle, such as oblique driving and in-situ steering, can also be realized through the control of a single wheel, further improving the vehicle maneuverability. The overall structure of the distributed steering gear adopts a rack-and-pinion type, which has a mature structure and stable performance. Compared with the traditional double-axle steering gear, it reduces a single-side steering tie rod, the housing and the rack can be shortened by half in size, and a motor and a controller are integrated at the input gear shaft (in this embodiment, the independent steering gear is driven by a steering drive motor connected thereto, and the steering drive motor is connected to a motor controller to receive control signals), so the overall structure is simple and compact, facilitating the integrated layout of the wheel side module.

The housing 54 of the steering gear in this embodiment is provided with a mounting end for connection with the wheel side bracket 4.

The wheel side bracket 4 is respectively connected to the distributed steering gear 5, the shock absorber 8, and the lower rear control arm 6 and the lower front control arm 7, and the integration of the chassis system is realized through the wheel side bracket 4 which is made of aluminum alloy material. Its specific structure is as follows: it includes an upper connection part 41, a middle connection part 42 and a lower connection part 43; the bottom of the upper connection part 41 extends outward and then bends vertically downward to form a stepped structure for avoiding the wheel housing; the bottom of the lower bent part continues to extend downward through an inclined support structure 424 to form the middle connection part 42, the inclined support structure 424 can effectively increase the lateral layout space of the wheel side bracket 4, the left side of the inclined support structure 424 first concaves inward and then stretches outward; and the bottom of the middle connection part 42 is connected to the lower connection part 43 formed by horizontal extension.

The upper connection part 41 is provided with a support surface 411, and the support surface 411 is connected with the shock absorber 8. Weight reduction grooves 417 are respectively arranged on both sides of the support surface 411, and cross-shaped reinforcing ribs are arranged inside the weight reduction grooves 417 to strengthen local support and improve the strength of the upper connection part 41. A central hole 414 is arranged at the center of the two weight reduction grooves 417.

A flange 413 for connecting the shock absorber 8 is arranged in a direction perpendicular to the support surface 411; a circular hole 412 for avoiding the locking structure at the upper end of the piston rod of the shock absorber 8 is arranged at the center of the flange 413; the upper connection part 41 is connected with the circular upper support of the shock absorber 8 through the flange 413 and mounting bolts matched with the through holes on the flange 413. Bosses 415 for connecting the upper control arm 3 are arranged on both sides of the top of the support surface 411; threaded holes are arranged on the bosses 415, and wire thread inserts are inlaid in the threaded holes to avoid damage to the threaded holes caused by repeated disassembly and assembly of the aluminum alloy material.

In this embodiment, the symmetrically arranged bosses 415 on both sides in the thickness direction of the upper connection part 41 are locally thickened to form thickened ends 416, and the thickened ends 416 are in contact with the upper control arm 3, which can improve the mounting strength at the mounting position of the upper control arm 3. Reinforcing ribs 418 are further arranged on the thickened ends 416 of the bosses; the reinforcing ribs 418 extend from the surface of the thickened ends 416 of the bosses through the surface of the middle connection part 42 to the surface of the lower connection part 43, for increasing the vertical rigidity of the bosses 415 of the upper control arm 3 and the shock absorber mounting flange 413, and also for improving the overall rigidity of the entire wheel side bracket 4. The two thickened bosses are connected by a connecting reinforcing rib 419 for improving the longitudinal rigidity of the adjacent thickened bosses 415. A longitudinal reinforcing rib 4110 is further arranged on the upper connection part 41 for improving the longitudinal rigidity of the upper connection part 41.

In this embodiment, frame upper mounting bosses 421 for connection with the frame are arranged at the lower bent part of the middle connection part 42; the frame upper mounting bosses 421 are respectively arranged on both sides of the lower bent part; 8 through holes for fixing bolts are arranged on the frame upper mounting bosses 421; a weight reduction groove 423 is formed at the center of each frame upper mounting boss 421. A weight reduction groove 422 is further arranged between the two frame upper mounting bosses 421, and cross-shaped reinforcing ribs for enhancing local supporting force are arranged in the weight reduction groove 422. The middle connection part 42 is further provided with a lower front control arm bracket 4210 and a lower rear control arm bracket 4211 for connection with the lower control arms.

A left weight reduction groove 425 and a right weight reduction groove 426 with reinforcing ribs for enhancing their supporting force inside are respectively arranged on both sides of the surface of the inclined support structure 424. An avoidance groove 427 for avoiding the tie rod is arranged between the left weight reduction groove 425 and the right weight reduction groove 426; the avoidance groove 427 extends from the inclined support structure 424 to the lower connection part 43, and its size is determined through the motion analysis of the tie rod.

A groove 428 for avoiding the lower front control arm 7 is further arranged on the middle connection part 42. Longitudinal reinforcing ribs 429 for transmitting stress at the frame mounting position are arranged at the joint of the two frame upper mounting bosses 421, and at the same time improve the middle longitudinal rigidity and the overall strength. The lower front control arm bracket 4210 and the lower rear control arm bracket 4211 in this embodiment are designed according to the layout of the suspension design hard points. Longitudinal reinforcing ribs 4212 are arranged between the lower front control arm bracket 4210 and the lower rear control arm bracket 4211 for transmitting stress at the mounting positions of the two lower control arms, and at the same time improve the middle longitudinal rigidity and the overall strength.

The lower connection part 43 mainly integrates a steering gear mounting boss 431 and a frame lower mounting boss 432. The position of the steering gear mounting boss 431 is designed in cooperation with the structure of the distributed steering gear 5; threaded holes are arranged on the steering gear mounting boss 431, and wire thread inserts are inlaid in the threaded holes to avoid damage to the threaded holes caused by repeated disassembly and assembly of the aluminum alloy material; the steering gear mounting boss 431 and the frame lower mounting boss 432 have a mounting height difference to avoid affecting the mounting of the lower control arm on the back. There are 6 frame lower mounting bosses 432 in total, and through holes are designed on the bosses for mounting the frame lower longitudinal beam. Meanwhile, a cylindrical groove 433 connected with the bottom of the avoidance groove 427 is arranged on the lower connection part 43 for avoiding the steering gear.

The wheel side system of this embodiment adopts the traditional steering tie rod layout form, with a more compact space and more reasonable wheel movement, and is applicable to different vehicle motion working conditions. The steering gear drives a single wheel with a single tie rod, with a stable and mature structure.

The above are only specific embodiments of the present invention, but the protection scope of the present invention is not limited thereto. Any person skilled in the art can easily conceive of modifications or substitutions within the technical scope disclosed by the present invention, which shall all fall within the protection scope of the present invention. Therefore, the protection scope of the present invention shall be subject to the protection scope of the appended claims.

## Claims

1. A wheel side module system comprising a hub motor and a steering knuckle connected to the hub motor, wherein the wheel side module system further comprises:
a mounting suspension having a lower rear control arm connected to a frame and disposed at a lower end of a shock absorber, an upper control arm located at an upper end of the shock absorber and the lower rear control arm forming a double wishbone structure with a height difference; the disconnected lower rear control arm and lower front control arm being connected to one side of the steering knuckle, a virtual kingpin lower hard point of the lower rear control arm and the lower front control arm being advanced to the other side of the steering knuckle, and the hub motor being connected at a position of the virtual kingpin lower hard point;
a distributed steering gear having an outer ball pin end of a tie rod for connection with the steering knuckle controlled by the hub motor; the tie rod being connected to an inner ball pin seat of the tie rod that is connected to one end of a rack; the steering gear for driving a single wheel on one side being driven by a steering drive motor connected thereto, the steering drive motor being connected to a motor controller to receive control signals, and a housing of the steering gear being provided with a mounting end for connection with a wheel side bracket; and
the wheel side bracket being respectively connected to the distributed steering gear, the shock absorber, and the lower rear control arm and the lower front control arm of the mounting suspension.

2. The wheel side module system according to claim 1, wherein the wheel side bracket comprises an upper connection part, a middle connection part and a lower connection part; a bottom of the upper connection part extends horizontally and then bends vertically downward to form a stepped structure for avoiding a wheel housing; a lower bent part extends downward continuously through an inclined support structure to form the middle connection part, a left side of the inclined support structure first concaves inward and then stretches outward; and a bottom of the middle connection part is connected to the lower connection part formed by horizontal extension.

3. The wheel side module system according to claim 2, wherein the upper connection part is integrated with an upper shock absorber mounting flange and upper control arm bosses; a circular hole for avoiding a locking structure at an upper end of a shock absorber piston rod is designed at a center of the upper shock absorber mounting flange for connection with a circular upper support of the shock absorber, and mounting through holes matched with mounting bolts for fixing the upper support of the shock absorber are further arranged around the circular hole;
threaded holes for mounting the upper control arm are arranged on the upper control arm bosses, the upper control arm bosses are provided with thickened ends for improving mounting strength at a mounting position of the upper control arm, and reinforcing ribs for increasing vertical rigidity of the upper control arm mounting bosses and the shock absorber mounting flange, which start from the thickened ends and extend to a surface of the lower connection part, are respectively arranged on the two upper control arm bosses.

4. The wheel side module system according to claim 3, wherein the thickened ends of the two upper control arm bosses are connected by a reinforcing rib for improving longitudinal rigidity.

5. The wheel side module system according to claim 3, wherein weight reduction grooves are symmetrically arranged on the upper connection part, cross-shaped reinforcing ribs are arranged inside the weight reduction grooves, and a central hole is further arranged between the two weight reduction grooves.

6. The wheel side module system according to claim 2, wherein two frame upper mounting bosses, a lower front control arm bracket and a lower rear control arm bracket for connection with lower control arms are symmetrically arranged on the middle connection part; a left weight reduction groove and a right weight reduction groove are arranged on the inclined support structure of the middle connection part, and an avoidance groove for avoiding the tie rod is arranged between the left weight reduction groove and the right weight reduction groove;
the middle connection part further comprises a groove for avoiding the lower front control arm; longitudinal reinforcing ribs for transmitting stress at a frame mounting position are arranged at a joint of the two frame upper mounting bosses, and longitudinal reinforcing ribs for transmitting stress at mounting positions of the two lower control arms are connected between the lower front control arm bracket and the lower rear control arm bracket.

7. The wheel side module system according to claim 6, wherein cross-shaped reinforcing ribs are arranged in the left weight reduction groove and the right weight reduction groove.

8. The wheel side module system according to claim 2, wherein a steering gear mounting boss and a frame lower mounting boss with a height difference are arranged on the lower connection part, and the lower connection part further comprises the frame lower mounting boss with through holes for connection with a frame lower longitudinal beam and a cylindrical groove for avoiding the steering gear.
